# EUROPÄISCHE PATENTANMELDUNG

(11) **EP 0 727 137 A1**
(43) Veröffentlichungstag der Anmeldung: **21.08.1996**
(21) Anmeldenummer: 96100396.9
(22) Anmeldetag: 12.01.1996
(51) Int. Cl.: A01J 5/007

(54) **Verfahren zur automatischen, milchflussabhängigen Regulierung der Vakuumapplikation beim maschinellen Milchentzug**

(30) Priorität: 18.02.1995 DE 19505577
(71) Anmelder: WESTFALIA SEPARATOR AG, D-59302 Oelde (DE)
(72) Erfinder: Hömberg, Dirk, Dipl.-Ing., D-48167 Münster (DE)
(74) Vertreter: Stracke, Alexander, Dipl.-Ing.

(57) **Zusammenfassung**

Verfahren zur automatischen, milchflußabhängigen Regulierung der Vakuumapplikation beim maschinellen Milchentzug.

Gegenstand der vorliegenden Erfindung ist ein Verfahren zur automatischen, milchlußabhängigen Regulierung der Vakuumapplikation beim maschinellen Milchentzug, bei dem die in ein elastisches Zitzengummi eingeführte Zitze einem vorbestimmten Unterdruck ausgesetzt wird, im Zwischenraum zwischen einem Melkbechergehäuse und dem die Zitze umschließenden Zitzengummi ein pulsierender Unterdruck angelegt wird, eine fortlaufende Messung den Milchfluß je Zeiteinheit erfaßt und die Vakuumapplikation in Abhängigkeit des Meßergebnisses variiert wird.

Es soll erreicht werden, daß die Vakuumapplikation an den gemessenen Milchfluß so angepaßt wird, daß bei hohem Milchflußpotential ein zügiger Milchentzug gewährleistet ist und andererseits bei Tieren mit geringen Milchflüssen bzw. bei nachlassenden Milchflüssen die Milch nicht schneller abgemolken wird, als sie aus den oberen Euterregionen in die Zisternen abfließen kann. Somit soll das Auftreten von Nachgemelken und Eutergewebsbeschädigungen weitestgehend verhindert und die Belastung des Eutergewebes beim Melkvorgang auf ein Minimum beschränkt werden.Dies wird erfindungsgemäß dadurch erreicht, daß eine mit der Milchflußintensität gleichgerichtete Variierung eines Parameters oder mehrerer Parameter der Vakuumapplikation (Pulszyklusphasen, Pulszahl, Melkbecherzwischenraumvakuum) zumindest während des überwiegenden Teils des Melkvorganges erfolgt.

## Beschreibung

Die vorliegende Erfindung betrifft ein Verfahren zur automatischen, milchflußabhängigen Regulierung der Vakuumapplikation beim maschinellen Milchentzug, bei dem die in ein elastisches Zitzengummi eingeführte Zitze einem vorbestimmten Unterdruck ausgesetzt wird, an dem Zwischenraum zwischen einem Melkbechergehäuse und dem die Zitze umschließenden Zitzengummi ein pulsierender Unterdruck angelegt wird, eine fortlaufende Messung den Milchfluß je Zeiteinheit erfaßt und die Vakuumapplikation in Abhängigkeit des Meßergebnisses variiert wird.

Grundlage einer wirtschaftlichen Milchproduktion ist u.a. ein möglichst zügiger, vollständiger und euterschonender Milchentzug. In diesem Zusammenhang ist zu beachten, daß sich der gesamte Vorgang des Milchentzugs in das vom Tier vorzunehmende, hormonell bewirkte Auspressen der Milch aus den oberen Euterregionen (Alveolen) in die darunterliegenden Hohlräume (Zisternen) und das durch die Melkmaschine erfolgende Absaugen der in die Zisternen ausgepreßten Milch gliedert. Diese Vorgänge laufen während des gesamten Melkprozesses ab und beeinflussen sich teilweise gegenseitig. So ist die Geschwindigkeit des Auspressens von Aleolarmilch einerseits von tierindividuellen Faktoren und der erfolgten Vorstimulation sowie andererseits vom Füllungsgrad bzw. Innendruck der Zisternen abhängig. Wird beispielsweise die Milch aus den Zisternen langsamer entzogen, als sie das Tier aus den Alveolen auspreßt, kommt es zu einer verminderten Melkgeschwindigkeit und, bei einem dem Tier Schmerzen bereitenden, übermäßigen Anstieg des Euterinnendrucks, zu einer Störung des Auspressens von Aleolarmilch.

Wenn hingegen die Milch schneller aus den Zisternen entzogen wird, als sie das Tier aus den Alveolen nachpreßt, kommt es zu einer nachhaltigen Störung der Milchabgabe, verbunden mit erhöhten Nachgemelken, sowie zu einer vermehrten Belastung des Eutergewebes. Dies ist darauf zurückzuführen, daß sich durch eine Erhöhung der Melkintensität zwar die Geschwindigkeit des Entzugs von Zisternenmilch, nicht aber die Geschwindigkeit des Auspressens von Alveolarmilch beschleunigen läßt. Bei einem zu schnellen Absaugen von Zisternenmilch pflanzt sich dann gegen Ende der Saugphasen Vakuum in die leeren Zisternen fort, was zu einer Verengung des Eutergewebes im Bereich der Passagewege zwischen Alveolen und Zisternen und so letztendlich zur erwähnten Störung der Milchabgabe und Belastung des Eutergewebes führt.

Aufgrund der zuvor dargestellten Zusammenhänge ist die Milch aus den Zisternen stets so schnell abzumelken, wie sie vom Tier aus den Alveolen nachgepreßt wird. Lediglich durch eine solche Gestaltung des Melkvorgangs ist der geforderte zügige, vollständige und euterschonende Milchentzug zu gewährleisten, der äußerlich an einem während des Melkprozesses von oben nach unten gleichmäßig zusamenfallenden Euter zu erkennen ist. Diesbezüglich kommt neben der Höhe des an die Zitzen applizierten Unterdrucks der Gestaltung der Pulsation ein besonderer Stellenwert zu.

Im einzelnen sind dabei die Länge bzw. der prozentuale Anteil der einzelnen Pulszyklusphasen, die Anzahl der Pulszyklen je Zeiteinheit und die Höhe bzw. der Verlauf des im Melkbecherzwischenraum pulsierend angelegten Unterdruckes von Bedeutung. Der an den Zitzen anliegende Unterdruck hat Einfluß auf die Milchflußintensität, das Nachgemelkverhalten und die Eutergesundheit, da die daraus resultierenden Kräfte einerseits die Öffnung und Weitung des Strichkanales bewirken und andererseits direkt auf die zu entziehende Milch und das Eutergewebe einwirken. Ein hohes zitzenendiges Vakuum führt tendentiell zu einer Erhöhung der Minutengemelke. Dem steht gegenüber, daß bei erhöhtem zitzenendigen Vakuum durch zu schnellen Milchentzug und vermehrtes Ansaugen von Blut und Lymphe erhöhte Nachgemelke sowie Eutergewebsbeschädigungen zu erwarten sind.

Der Einfluß der Länge bzw. prozentualen Anteile der einzelnen Pulszyklusphasen auf die Milchabgabe beruht darauf, daß diese Faktoren die Länge der Milchflußphasen je Zeiteinheit bestimmen. Die Länge der einzelnen Milchflußphasen beeinflußt ihrerseits wiederum die ermolkene Milchmenge je Zeiteinheit und somit die Milchflußhöhe bzw. Melkgeschwindigkeit.

Gleichzeitig wird durch die Länge der Milchflußphasen auch der Zeitraum bestimmt, der pro Minute für das Nachpressen ermolkener Milch aus den oberen Euterregionen (Alveolen) in die Zisterne zur Verfügung steht.

Unterschiedliche prozentuale Saugphasenanteile haben aus vorgenannten Gründen beachtliche Auswirkungen auf die Milchabgabe der Tiere. So ermöglichen hohe prozentuale Saugphasenanteile aufgrund der verlängerten Milchflußphasen bei leichtmelkenden Tieren ein Ausschöpfen des genetischen Milchflußpotentials, während bei schwermelkenden Tieren der unelastische Strichkanal in langen Milchflußphasen stärker geöffnet wird, was den Milchfluß unterstützt, sofern ausreichend Milch aus den oberen Euterregionen nachgepreßt wird.

Ausgedehnte Saugphasen führen somit tendentiell zu einer Steigerung der Minutengemelke, wobei Saugphasenanteile von über 70% jedoch keine weitere nennenswerte Steierung der Melkgeschwindigkeit bewirken, da der Milchfluß zum Ende der einzelnen Zyklen wieder deutlich nachläßt. Gleichzeitig würde die Dauer für eine ausreichende Euterentlastung bei solch hohen Saugphasenanteilen zu kurz werden. Neben einer Steigerung der Melkgeschwindigkeit können hohe Saugphasenanteile jedoch auch ein Ansteigen der Nachgemelkmengen und somit wieder eine Verlängerung der Melkdauer verursachen, wenn die Länge der Milchflußphasen so hoch ist, daß die Milch aus der Zisterne schneller entzogen wird, als sie aus den Alveolen nachgepreßt wird.

Geringe Saugphasenanteile hingegen ziehen tendentiell eine Verringerung der Minutengemelke nach sich. Diese Verringerung ist um so stärker, je höher die möglichen Milchflüsse während der einzelnen Saugphasen sind. Bei einem Saugphasenanteil von weniger als 40% ist kein zügiger Milchentzug gewährleistet, da die Längen der Milchflußphasen selbst für kleinste Milchflüsse zu gering sind. Gleichzeitig bewirken geringe Saugphasenanteile bei geringen Milchflüssen eine Verringerung der Nachgemelkmengen, da sich die Dauer für das Nachpressen ermolkener Milch erhöht und das Einwirken von Vakuum auf leeres Eutergewebe verringert wird.

Die Bedeutung der Pulszahl auf die Milchabgabe resultiert im wesentlichen aus der Tatsache, daß der Schließmuskel des Euters aufgrund seiner begrenzten Reaktionsgeschwindigkeit den Zitzengummibewegungen nur bis zu einer Pulszahl von ca. 50 Z pro Minute in vollem Umfang folgen kann und daß die Pulsfrequenz die Anzahl der zu Beginn der Saugphasen auftretenden Spitzenmilchflüsse je Zeiteinheit bestimmt.

Der weitere Einfluß der Pulszahl auf die Milchabgabe liegt darin, daß sich mit der Pulszahl die relative Länge der einzelnen Pulsationsphasen ändert. Folglich haben auch abweichende Pulszahlen beachtenswerte Auswirkungen auf das Melkverhalten. Erhöhte Pulszahlen bewirken, daß der Schließmuskel während der Entlastungsphasen nicht mehr vollständig schließt und folglich nur teilweise wieder geöffnet werden muß. Zudem werden bei hoher Pulszahl mehr Saugphasenanfänge (Spitzenflüsse) je Minute erfaßt. Demgegenüber steht die Tatsache, daß eine hohe Pulszahl zu geringeren relativen Saugphasenlängen je Pulszyklus führt. Dennoch führt eine erhöhte Pulszahl aufgrund ihrer zuvor dargestellten Auswirkungen letztendlich zu einer Erhöhung der Minutengemelke, wobei jedoch eine Pulszahlerhöhung über 60 Z pro Minute hinaus keine weitere nennenswerte Steigerung der Melkgeschwindigkeit bewirkt. Auf der anderen Seite verursacht eine erhöhte Pulszahl ein vorzeitiges Ermüden des Schließmuskels und ein unvollständiges Schließen des Strichkanals.

Besonders bei geringen Milchflüssen gehen damit als negative Begleiterscheinungen ein Eindringen von Vakuum in das Euter und ein durch die Zitzengummibewegung verursachtes Einmassieren von Milchpartikeln und Bakterien in den Strichkanal einher. Außerdem kann sich eine erhöhte Pulszahl durch höhere Nachgemelke negativ bemerkbar machen, wenn sie bei geringem Milchfluß bewirkt, daß die Milch aus den Zisternen schneller abgemolken wird, als sie aus den oberen Euterregionen nachgepreßt wird.

Geringe Pulszahlen hingegen haben zunehmende relative Saugphasenlängen zur Folge. Aufgrund der hierdurch bewirkten Verringerung der Entlastungsdauer kommt es besonders bei hohen prozentualen Saugphasenanteilen zu Blut- und Lymphstau in den Zitzenspitzen, was letztendlich eine Strichkanalverengung bewirkt.

Geringe Pulszahlen sollten daher niemals mit hohen Saugphasenanteilen kombiniert werden. Demgegenüber steht, daß geringe Pulszahlen dem Schließmuskel ausreichend Reaktionszeit gewähren und dadurch ein vollständiges Verschließen des Strichkanals während der Entlastungsphasen begünstigen. Dadurch wird besonders bei geringen Milchflüssen das Eindringen von Vakuum in das Eutergewebe beschränkt, was letztendlich eine Schonung des Eutergewebes bedeutet. Eine Verringerung der Pulszahl unter 40 Z/min wirkt sich jedoch wieder eher nachteilig auf die Eutergesundheit aus, da der Milchfluß zu stark beeinträchtigt wird.

Höhe und Verlauf des im Melkbecherzwischenraum pulsierend angelegten Unterdrucks haben für die Milchabgabe Bedeutung, da hiervon abhängt, wie weit die Zitzengummis während der einzelnen Saugphasen geöffnet werden.

Ein während der Saugphase im Melkbecherzwischenraum angelegter hoher Unterdruck bewirkt, daß das Zitzengummi weit geöffnet wird, was eine Voraussetzung für hohe Milchflüsse darstellt. Währenddessen hat ein während der Saugphase im Melkbecherzwischenraum angelegter niedriger Unterdruck ein unvollständiges Öffnen der Zitzengummis zur Folge, was die Haftreibung zwischen Zitzengummi und Zitze verbessert, insbesondere, wenn die Zitze bei nachlassendem Euterinnendruck bzw. Milchfluß erschlafft.

Ein Verfahren zur Anpassung der Vakuumapplikation an Milchflußmeßwerte ist bereits in der DE 36 09 275 A1 beschrieben. Bei diesem Verfahren werden die Milchflußprofile einzelner Zitzen und Pulszyklen erfaßt und anschließend als Grundlage für die weitere Gestaltung der Vakuumapplikation rechnerisch ausgewertet. Ein charakteristisches Merkmal von Milchflußprofilen einzelner Pulszyklen ist, daß sie zwar den momentanen Milchfluß eines Tieres wiederspiegeln, ihre Form jedoch nicht nur vom Milchabgabeverhalten der Tiere, sondern auch von der verwendeten Melktechnik, der erfolgten Vakuumapplikation und den Interaktionen zwischen Tier und Technik abhängt. Daher gestaltet sich die Analyse der Ursachen bestimmter Milchflußprofile schwierig. Die in der vorerwähnten Literaturstelle beschriebene Vorgehensweise, den Milchfluß durch die Gestaltung der Vakuumapplikation so zu beeinflussen, daß eine oder mehrere der aufgeführten Optimierungszielgrößen realisiert werden, erscheint problematisch. So könnten beispielsweise bei einer Angleichung der Melkgeschwindigkeit aller Tiere einer Melkstandgruppe leichtmelkende Tiere durch eine zu geringe Intensität der Vakuumapplikation zu langsam gemolken und dadurch frustriert werden, während schwermelkende Tiere durch eine zu intensive Vakuumapplikation zu schnell abgemolken würden, was die beschriebenen Nachteile mit sich bringt.

Das in der in Rede stehenden Literaturstelle beschriebene Verfahren erfordert außerdem zu seiner Durchführung einen hohen technischen und finanziellen Aufwand. So werden neben aufwendigen Meßeinrichtungen an den einzelnen Melkbechern zusätzlich für jeden Pulsator separate Prozeßrechner benötigt.

Aufgrund dieses hohen technischen und finanziellen Aufwandes des bekannten Verfahrens wird empfohlen, zur Minderung dieses Aufwandes eine Messung und Anpassung der Vakuumapplikation lediglich ein- oder mehrmals je Lakationsperiode mittels zeitweise angemieteter, spezieller Melkmeßeinrichtungen vorzunehmen.

Eine solche Vorgehensweise ist aufgrund der bekannterweise starken täglichen Streuung des Milchflußverhaltens fragwürdig.

Weiterhin ist es bekannt, eine Anpassung der Pulsphasenanteile und Pulsfrequenz an verschiedene Milchflußhöhen vorzunehmen, jedoch werden bei diesem bekannten Verfahren niedrige Pulsfrequenzen mit hohen Saugphasenanteilen kombiniert, was, wie bereits dargestellt, aus euterphysiologischen Gründen nicht vorgenommen werden sollte.

Desweiteren erfolgt im Bereich niedriger Milchflußintensitäten eine Erhöhung der Pulsfrequenz, was zu den beschriebenen Auswirkungen führen kann. Die vorgenommene Art der Pulsatorsteuerung mag so zwar zu Beginn des Melkvorganges zu erhöhten Minutengemelken führen. Dem steht jedoch gegenüber, daß höhere Nachgemelke und bedeutende negative Auswirkungen auf die Eutergesundheit möglich sind.

Weiterhin sind Melkverfahren bekannt, die eine Änderung der Vakuumapplikation in Abhängigkeit des Milchflusses vornehmen, mit dem Ziel, das üblicherweise gegen Ende eines Melkvorgangs auftretende Klettern der Melkbecher zu verringern oder zu verhindern. Diese Verfahren beschränken sich daher im wesentlichen auf das Ende eines Melkvorganges, so daß keine milchflußabhängige Gestaltung der Vakuumapplikation während des gesamten Melkvorganges erfolgt. Bei diesen Verfahren erfolgt eine Steuerung der Vakuumapplikation erst dann, wenn der Milchfluß aufgrund einer zuvor oft zu intensiven Vakuumapplikation und des damit verbundenen zu schnellen Abmelkens stark abfällt. Somit werden letztendlich nicht die Ursachen für ein Anklettern der Melkbecher beseitigt, sondern es wird versucht, die Folgen dieser Ursachen zu mildern.

Eine Beachtung der Ansprüche an einen physiologisch optimalen Milchentzug durch entsprechende Gestaltung der Vakuumapplikation während des gesamten Melkvorganges erfolgt auch bei diesen Verfahren nicht.

Statt dessen nehmen die bekannten Verfahren eine Änderung der Vakuumapplikation meist nur auf Grundlage weniger Schwellenwerte vor, so daß sich eine großrasterige Regelungscharakteristik ergibt.

So ist aus der DE-PS 19 56 196 ein Verfahren bekannt, bei dem für die Faktoren der Vakuumapplikation in Abhängigkeit der Milchflußänderung je ein Ruhewert und ein Arbeitswert verwendet werden, wobei dem Ruhewert der ausbleibende Milchfluß zugeordnet ist.

Das in der DE 35 24 380 A1 beschriebene Verfahren sieht ebenfalls lediglich die Umschaltung zwischen einem Arbeitswert und je einem Ruhewert des Saugphasenanteils zu Beginn und Ende des Melkvorganges vor.

Auch das in der DE-PS 28 44 562 C2 erläuterte Verfahren beschränkt sich auf die Ausmelkphase. Die Intensität der Vakuumapplikation wird hier in Abhängigkeit von der Änderung des Milchflusses vermindert. In ähnlicher Weise wird bei dem aus der DE-OS 38 07 256 A1 bekannten Verfahren vorgegangen, wobei jedoch versucht wird, anhand gespeicherter Milchflußwerte vorausgegangener Melkzeiten die Melkintensität frühzeitig zu begrenzten. Die Funktionstüchtigkeit dieses Verfahrens ist insoweit fraglich, da das Milchflußverhalten nicht nur zwischen verschiedenen Tieren, sondern auch zwischen verschiedenen Melkzeiten eines Tieres starke Streuungen aufweist und die gespeicherten Daten somit nur bedingt als Grundlage zur Vorausschätzung des Milchflußverhaltens künftiger Melkzeiten geeignet sind.

Der vorliegenden Erfindung liegt die Aufgabe zugrunde, ein gattungsgemäßes Verfahren aufzuzeigen, nachdem bei vertretbarem technischen und finanziellen Aufwand für den dabei zu realisierenden Regelmechanismus zur Steuerung der Vakuumapplikation in bekannten Melkanlagen die Vakuumapplikation an den gemessenen Milchfluß so angepaßt werden kann, daß bei hohem Milchflußpotential ein zügiger Milchentzug gewährleistet ist und andererseits bei Tieren mit naturgemäß geringen Milchflüssen bzw. bei nachlassenden Milchflüssen die Milch nicht schneller abgemolken wird, als sie aus den oberen Euterregionen in die Zisternen nachfließen kann, so daß das Auftreten von Nachgemelken und Eutergewebsbeschädigungen weitestgehend verhindert und die Belastung des Eutergewebes beim Melkvorgang auf das notwendige Minimum beschränkt wird.

Diese Aufgabe wird dadurch gelöst, daß eine mit unterschiedlichen tierindividuellen Milchflußintensitäten bzw. mit sich während des Melkvorgangs ändernden Milchflußintensitäten gleichgerichtete Variierung eines oder mehrerer Parameter der Vakuumapplikation (Pulszyklusphasen, Pulszahl, Melkbecherzwischenraumvakuum) zumindest während des überwiegenden Teils des Melkvorganges erfolgt.

Bevorzugt ist dabei eine für hohe Milchflüsse ausreichende In tensität der Vakuumapplikation zu Beginn des Melkvorganges und eine Variierung der Parameter nach einer gewissen Zeitverzögerung.

Dabei kann die Zeitverzögerung bis zu ca. 2 Minuten betragen.

Anschließend erfolgt vorteilhafterweise eine fortlaufende Messung der Milchflußintensität, wobei anhand dieser Meßergebnisse für einzelne Zitzen getrennt oder für alle Zitzen einer Kuh gemeinsam eine laufende Anpassung der Vakuumapplikationsintensität an die tierindividuelle Milchflußhöhe bzw. an die sich während des Melkvorganges ändernde Milchflußintensität erfolgt.

Die Anpassung der Vakuumapplikation an die Milchflußwerte erfolgt dabei vorteilhafterweise dadurch, daß vorzugsweise die prozentualen Saugphasenanteile, die Pulsfrequenz und unter gewissen Umständen der im Melkbecherzwischenraum pulsierend angelegte Unterdruck gleichgerichtet mit der Milchflußintensität variiert werden. Es hat sich als zweckmäßig erwiesen, die Intensität der Vakuumapplikation über die Länge bzw. den prozentualen Anteil der einzelnen Pulszykluszeiten zu regeln, wobei vorzugsweise der Saugphasenanteil in einem Bereich zwischen 40 bis 70% Saugphase variiert wird.

Es kann auch die Intensität der Vakuumapplikation über die Pulsatorfrequenz geregelt werden, wobei die Anzahl der Pulszyklen vorzugsweise in einem Bereich zwischen 40 bis 70 Doppeltakten je Minute variiert wird.

Besonders vorteilhaft ist es in vielen Fällen, die Regulierung der Vakuumapplikationsintensität anhand einer kombinierten Variierung von Saugphasenlänge bzw. -anteil und Pulszahl vorzunehmen.

Es besteht auch die Möglichkeit, die Intensität der Vakuumapplikation über den an dem Zwischenraum zwischen dem Melkbechergehäuse und dem die Zitze umschließenden Zitzengummi pulsierend angelegten Unterdruck zu regeln, wobei in diesem Falle die Höhe dieses Unterdrucks vorzugsweise während der Saugphasen in einem Bereich zwischen 10 kPa und einem geringeren Unterdruck als dem an den Zitzen anliegenden Unterdruck variiert wird.

Schließlich ist es auch möglich, die Intensität der Vakuumapplikation über den an den Zitzen anliegenden Unterdruck zu regeln, wobei in diesem Falle die Höhe des Unterdruckes vorzugsweise in einem Bereich zwischen 30 und 50 kPa variiert wird.

Alle diese verfahrensgemäßen Schritte führen dazu, daß die Vakuumapplikation an den gemessenen Milchfluß so angepaßt wird, daß bei hohem Milchflußpotential ein zügiger Milchentzug gewährleistet ist bzw. daß bei Tieren mit naturgemäß geringen Milchflüssen bzw. bei nachlassenden Milchflüssen die Milch nicht schneller abgemolken wird, als sie aus den oberen Euterregionen in die Zisternen nachgepreßt wird bzw. nachfließen kann, so daß das Auftreten von Nachgemelken und Eutergewebsbeschädigungen weitestgehend verhindert und die Belastung des Eutergewebes beim Melkvorgang auf das notwendige Minimum beschränkt wird.

## Patentansprüche

1. Verfahren zur automatischen, milchflußabhängigen Regulierung der Vakuumapplikation beim maschinellen Milchentzug, bei dem die in ein elastisches Zitzengummi eingeführte Zitze einem vorbestimmten Unterdruck ausgesetzt wird, an dem Zwischenraum zwischen einem Melkbechergehäuse und dem die Zitze umschließenden Zitzengummi ein pulsierender Unterdruck angelegt wird, eine fortlaufende Messung den Milchfluß je Zeiteinheit erfaßt und die Vakuumapplikation in Abhängigkeit des Meßergebnisses variiert wird, **dadurch gekennzeichnet, daß** eine mit unterschiedlichen tierindividuellen Milchflußintentitäten bzw. mit sich während des Melkvorganges ändernden Milchflußintensitäten gleichgerichtete Variierung eines oder mehrer Parameter der Vakuumapplikation (Pulszyklusphasen, Pulszahl, Melkbecherzwischenraumvakuum), zumindest während des überwiegenden Teils des Melkvorganges erfolgt.

2. Verfahren nach Anspruch 1, **dadurch gekennzeichnet, daß** die Vakuumapplikation zu Beginn des Melkvorganges mit einer für höchste Milchflüsse ausreichenden Intensität erfolgt und eine Variierung der Parameter nach einer gewissen Zeitverzögerung erfolgt.

3. Verfahren nach Anspruch 2, **dadurch gekennzeichnet, daß** die Zeitverzögerung bis zu ca. 2 Minuten beträgt.

4. Verfahren nach einem oder mehreren der Ansprüche 1 - 3, **dadurch gekennzeichnet, daß** eine fortlaufende Messung der Milchflußintensität durchgeführt wird, wobei anhand der Meßergebnisse für einzelne Zitzen getrennt oder für alle Zitzen einer Kuh gemeinsam eine laufende Anpassung der Vakuumapplikationsintensität an die tierindividuelle Milchflußhöhe bzw. an die sich während des Melkvorganges ändernde Milchflußintensität erfolgt.

5. Verfahren nach einem oder mehreren der vorhergehenden Ansprüche, **dadurch gekennzeichnet, daß** vorzugsweise die prozentualen Saugphasenanteile, die Pulsfrequenz und unter gewissen Umständen der im Melkbecherzwischenraum pulsierend angelegte Unterdruck gleichgerichtet mit der Milchflußintensität variiert werden.

6. Verfahren nach einem oder mehreren der vorhergehenden Ansprüche, **dadurch gekennzeichnet, daß** die Intensität der Vakuumapplikation über die Länge bzw. den prozentualen Anteil der einzelnen Pulszykluszeiten geregelt wird, wobei vorzugsweise der Saugphasenanteil in einem Bereich zwischen 40 - 70% Saugphase variiert wird.

7. Verfahren nach einem oder mehreren der vorhergehenden Ansprüche, **dadurch gekennzeichnet, daß** die Intensität der Vakuumapplikation über die Pulsatorfrequenz geregelt wird, wobei die Anzahl der Pulszyklen vorzugsweise in einem Bereich zwischen 40 - 70 Doppeltakten je Minute variiert wird.

8. Verfahren nach einem oder mehreren der vorhergehenden Ansprüche, **dadurch gekennzeichnet, daß** die Intensität der Vakuumapplikation über den an dem Zwischenraum zwischen dem Melkbechergehäuse und dem die Zitze umschließenden Zitzengummi pulsierend angelegten Unterdruck geregelt wird, wobei die Höhe dieses Unterdrucks vorzugsweise während der Saugphasen in einem Bereich zwischen 10 kPa und einem geringeren Unterdruck als dem an den Zitzen anliegenden Unterdruck variiert wird.

9. Verfahren nach einem oder mehreren der vorhergehenden Ansprüche, **dadurch gekennzeichnet, daß** die Intensität der Vakuumapplikation über den an den Zitzen anliegenden Unterdruck geregelt wird, wobei die Höhe des Unterdruckes vorzugsweise in einem Bereich zwischen 30 und 50 kPa variiert wird.
